# EUROPEAN PATENT APPLICATION

(11) **EP 4 383 420 A1**
(43) Date of publication of application: **12.06.2024**
(21) Application number: 23211960.2
(22) Date of filing: 24.11.2023
(51) Int. Cl.: H01M 50/213, H01M 50/30

(54) **RECHARGEABLE BATTERY MODULE**

(30) Priority: 07.12.2022 KR 20220169818; 13.09.2023 KR 20230121977
(71) Applicant: Samsung SDI Co., Ltd., Yongin-si, Gyeonggi-do 17084 (KR)
(72) Inventor: BAE, Kwangsoo, 17084 Yongin-si (KR); KIM, Jae-Seung, 17084 Yongin-si (KR)
(74) Representative: Marks & Clerk LLP

(57) **Abstract**

An embodiment of the present disclosure provides a rechargeable battery module for smoothly opening the vent in an emergency and preventing a chain explosion of peripheral battery cells. The rechargeable battery module includes: a plurality of battery cells including a vent hole; a first holder for receiving one of sides of the battery cells and supporting the same; a second holder receiving other sides of the battery cells and supporting the same and combined to the first holder; a first plate installed on one side of the second holder and installing an outlet group made of a plurality of outlets on positions corresponding to the respective vent holes of the battery cells; and a second plate disposed on one side of the first plate, and intercepting an emission discharged through the vent hole and the outlet group.

## Description

### BACKGROUND OF THE DISCLOSURE

### (a) Field of the Disclosure

The present disclosure relates to a rechargeable battery module. More particularly, the present disclosure relates to a rechargeable battery module for preventing chain explosion of peripheral battery cells by providing smooth vent opening in an emergency.

### (b) Description of the Related Art

A rechargeable battery repeats charging and discharging, differing from a primary cell. A small rechargeable battery is used for portable small electronic devices such as a mobile phone, a laptop computer, or a camcorder. A large capacity and high density rechargeable battery is used to store motor driving power or energy of hybrid vehicles and electric vehicles.

The rechargeable battery includes an electrode assembly for charging and discharging a current, a case for receiving the electrode assembly and an electrolyte solution, and an electrode terminal connected to the electrode assembly and drawn to an outside of the case. The electrode assembly may be made in a jellyroll type formed by winding an electrode and a separation film.

An electric vehicle and an energy storage device need a large capacity of rechargeable battery modules. The large capacity of rechargeable battery modules includes a plurality of battery cells. When a fire or an explosion happens to a battery cell of the module, flame or gas at a high temperature discharged by the battery cell may be transmitted to neighboring battery cells to cause a chain explosion.

Hence, methods for preventing the drawbacks are needed. For example, there is a potting method for covering a positive electrode of the battery cell with a foamed urethane or a silicon material. A potting material protects the battery cell from air and moisture in the ordinary days, foamed pores are generated in an emergency such as a thermal runaway to fluently discharge vent gas and debris of the battery cell, and the potting material prevents the discharged debris from being transmitted to the adjacent battery cells to thus prevent a chain explosion.

The potting material is expensive and is difficult in managing its process so it increases total processing costs of the rechargeable battery module, and the potting material permeates into a space between a cap assembly in a cylindrical battery to stop vent opening of the battery cell and resultantly generate side effects such as a side rupture.

The above information disclosed in this Background section is only for enhancement of understanding of the background of the disclosure, and therefore it may contain information that does not form the prior art that is already known in this country to a person of ordinary skill in the art.

### SUMMARY OF THE DISCLOSURE

The present disclosure has been made in an effort to provide a rechargeable battery module for preventing a chain explosion of peripheral battery cells by providing a smooth vent opening in an emergency.

An embodiment of the present disclosure provides a rechargeable battery module including: a plurality of battery cells including a vent hole; a first holder for receiving one of sides of the battery cells and supporting the same; a second holder receiving other sides of the battery cells and supporting the same and combined to the first holder; a first plate installed on one side of the second holder and installing (*e*.*g*. including) an outlet group made of a plurality of outlets at positions corresponding to the respective vent holes of the battery cells; and a second plate disposed on one side of the first plate, and intercepting (*e*.*g*. configured to intercept) an emission discharged through the vent hole and the outlet group.

The battery cells may be made into (*e*.*g*. may be in the form of) a cylindrical rechargeable battery.

The outlet may have a first width in a diameter direction and may have a first length in a circumferential direction, and the outlet group may include the outlets and may have a first gap in the circumferential direction.

The outlet group may generate an entire area (A1-A2) by an external first diameter D1 and an internal second diameter D2, the entire area (A1-A2) may include an opened area (A3*N) caused by a plurality of first outlets and a closed area (A4*N) caused by a space among a plurality of first outlets, and a ratio of the closed area (A4*N) to the entire area (A1-A2) may be established to be greater than 10.78% and less than 31.3%.

The ratio (A4*N) of the closed area to the entire area (A1-A2) may be established to be greater than 10.78% and equal to or less than 15.4%.

The ratio (A4*N) of the closed area to the entire area (A1-A2) may be established to be greater than 15.4% and less than 31.3%.

The outlet group may include a plurality of first outlets corresponding to the vent hole and a plurality of second outlets installed on an exterior circumference of the first outlets.

The first outlet may have a first width in the diameter direction and may have a first length in the circumferential direction, the first outlets may have a first gap in the circumferential direction, the second outlets may have a second width in the diameter direction and may have a second length in the circumferential direction, and the second outlets may have a second gap in the circumferential direction.

The first outlets may generate a first entire area (A1-A2) by an external first diameter D1 and an internal second diameter D2, the first entire area (A1-A2) may include an opened area (A3*N) caused by a plurality of first outlets and a first closed area (A4*N) caused by a space among a plurality of first outlets, the second outlets may generate a second entire area (A21-A22) by an external second 1-diameter D21 and an internal second 2-diameter D22, the second entire area (A21-A22) may include an opened area (A23*N) caused by a plurality of second-1 outlets and a second closed area (A24*N) caused by a plurality of second outlets, and a ratio of a sum of the first closed area (A4*N) and the second closed area (A24*N) to a sum of the first entire area (A1-A2) and second entire area (A21-A22) may be established to be greater than 10.78% and less than 31.3.

The ratio of a sum of the first closed area (A4*N) and the second closed area (A24*N) to a sum of the first entire area (A1-A2) and the second entire area (A21-A22) may be further established to be greater than 10.78% and equal to or less than 15.4%.

The ratio of a sum of the first closed area (A4*N) and the second closed area (A24*N) to a sum of the first entire area (A1-A2) and the second entire area (A21-A22) may be further established to be greater than 15.4% and less than 31.3%.

At least some of the above and other features of the invention are set out in the claims.

According to the embodiment of the present disclosure, the outlet group is formed in the first plate to correspond the respective outlets to the vent holes of the respective battery cells, smoothly open the outlets in an emergency, and discharge explosion pressures, flame, and debris to the outside of the first plate, thereby preventing the chain explosion of the peripheral battery cells inside the first plate.

### BRIEF DESCRIPTION OF THE DRAWINGS

FIG. 1 shows an exploded perspective view of a rechargeable battery module according to a first embodiment of the present disclosure.
FIG. 2 shows a cross-sectional view with respect to a line II-II of FIG. 1.
FIG. 3 shows a cross-sectional perspective view of a cylindrical battery cell applied to FIG. 1.
FIG. 4 shows a partial top plan view of a first plate applied to FIG. 1.
FIG. 5 shows a top plan view of an outlet relationship of a first plate on a vent hole of a battery cell shown in FIG. 1 and FIG. 2.
FIG. 6 shows a top plan view of a first plate applied to a rechargeable battery module according to a second embodiment of the present disclosure.
FIG. 7 shows a top plan view of an outlet relationship of a first plate on a vent hole of a battery cell in FIG. 6.

### DETAILED DESCRIPTION OF THE EMBODIMENTS

The present disclosure will be described more fully hereinafter with reference to the accompanying drawings, in which embodiments of the disclosure are shown. As those skilled in the art would realize, the described embodiments may be modified in various different ways, all without departing from the scope of the present disclosure. The drawings and description are to be regarded as illustrative in nature and not restrictive. Like reference numerals designate like elements throughout the specification.

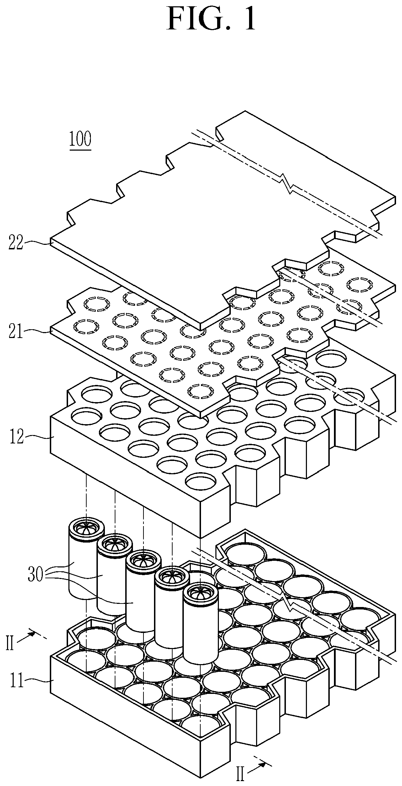

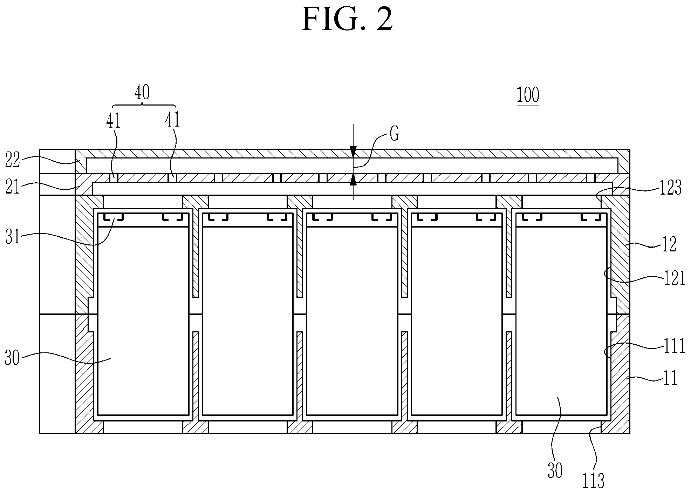

FIG. 1 shows an exploded perspective view of a rechargeable battery module according to a first embodiment of the present disclosure, and FIG. 2 shows a cross-sectional view with respect to a line II-II of FIG. 1. Referring to FIG. 1 and FIG. 2, the rechargeable battery module 100 includes a plurality of battery cells 30, a first holder 11, a second holder 12, a first plate 21, and a second plate 22. As an embodiment, the battery cells 30 may be formed to be cylindrical rechargeable batteries with a vent hole 31.

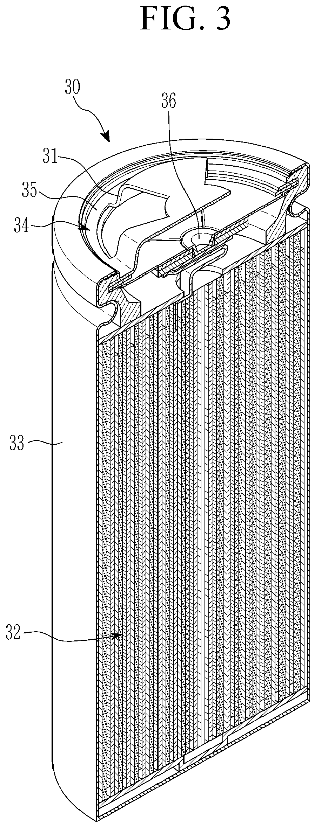

FIG. 3 shows a cross-sectional perspective view of a cylindrical battery cell applied to FIG. 1. Referring to FIG. 3, the cylindrical battery cell 30 includes an electrode assembly 32 for performing a charging and discharging, a case 33 housing the electrode assembly 32, and a cap assembly 34 electrically connected to the electrode assembly 32 and combined to an opening of the case 33 in an insulated state. The cap plate 35 forming the cap assembly 34 may include a vent hole 31 and may discharge an emission through the vent hole 31 when the vent 36 is incised. The emission includes vent gas, explosion pressures, flame, and debris.

Referring to FIG. 1 and FIG. 2, the first holder 11 forms a plurality of first receivers 111 to receive a first-side lower portion of the battery cells 30 and support the same. The second holder 12 forms a plurality of second receivers 121 to receive a second-side upper portion of the battery cells 30 and support the same. The second holder 12 is combined to the first holder 11 to receive the battery cells 30 in the first and second receivers 111 and 121.

For example, the first holder 11 includes a first protrusion 113 to support a first-side lower portion of the battery cell 30, and the second holder 12 includes a second protrusion 123 to support a second-side upper portion of the battery cell 30. The first and second protrusions 113 and 123 prevent the battery cell 30 from leaving upward or downward in the first and second holders 11 and 12 in the drawing.

The first plate 21 is provided on a first-side upper portion of the second holder 12 and respectively include an outlet group 40 formed of a plurality of outlets 41 on positions corresponding to the respective vent holes 31 of the battery cells 30. For example, the first plate 21 may be formed by plastic injection molding.

The second plate 22 is disposed on a first-side upper portion of the first plate 21 and is connected to the vent hole 31 and the outlets 41 of the outlet group 40 to block the emission discharged through the vent hole 31. That is, the second plate 22 intercepts the vent gas, explosion pressures, flame, and debris discharged through the vent hole 31.

For this purpose, the first and second plates 21 and 22 form a gap G in an up and down direction. A space between the first and second plates 21 and 22 caused by the gap G buffers the explosion pressure, radiates the flame, and block the debris to prevent the same from being scattered to the outside of the rechargeable battery module 100.

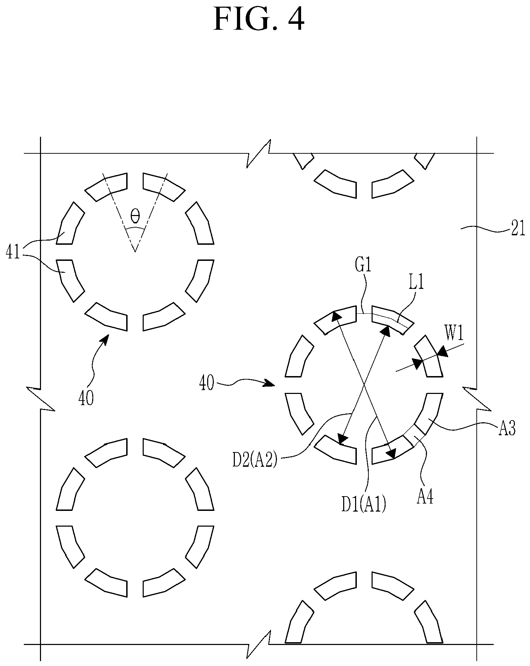

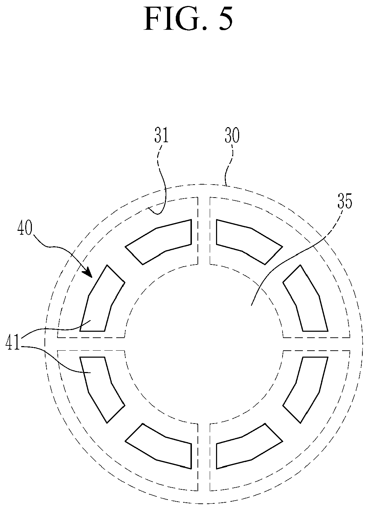

FIG. 4 shows a partial top plan view of a first plate applied to FIG. 1, and FIG. 5 shows a top plan view of an outlet relationship of a first plate on a vent hole of a battery cell shown in FIG. 1 and FIG. 2.

Referring to FIG. 1 to FIG. 5, regarding the outlet group 40 of the first plate 21, the outlet 41 has a first width W1 in a diameter direction and has a first length L1 in a circumferential direction. The first length L1 represents a length of a curve established in a middle of the first width W1. The outlet group 40 includes a plurality of outlets 41 and has a first gap G1 in the circumferential direction. The first gap G1 represents a length of a curve established between the two neighboring outlets 41 in the middle of the first width W1.

The outlets 41 are formed in the outlet group 40, and the adjacent outlets 41 may be set to have an angle (θ) of 15° to 60° with respect to the first length L1. For example, eight outlets 41 are formed in the outlet group 40, and two adjacent outlets 41 are set to have an angle (θ) of 45° with respect to the first length L1. Performance for intercepting the discharged explosion pressures, flame, and debris is determined by the number of the outlets 41. When the number of the outlets 41 is established, the performance for intercepting the discharged explosion pressures, flame, and debris is determined by the sizes of the first width W1, the first length L1, and the first gap G1 of the outlet 41.

The outlet group 40 forms an entire area (A1-A2) by an external first diameter D1 and an internal second diameter D2. That is, the first diameter D1 forms the first area A1, and the second diameter D2 forms the second area A2. Therefore, the entire area (A1-A2) of the outlet group 40 is calculated by subtracting the second area A2 from the first area A1.

In a first embodiment, the entire area (A1-A2) of the outlet group 40 includes an opened area (A3*N) by a plurality of outlets 41 and a closed area (A4*N) by a space among the outlets 41. The opened area (A3*N) is set to be A3*8, and the closed area (A4*N) is set to be A4*8. An area ratio ((A4*N)/(A1-A2)) of the closed area (A4*N) for the entire area (A1-A2) of the outlet group 40 is established to be greater than 10.78% and less than 31.3%.

When the area ratio ((A4*N)/(A1-A2)) is equal to or less than 10.78%, molding becomes difficult during injection. When the area ratio ((A4*N)/(A1-A2)) is greater than 10.78% and equal to or less than 15.4%, the injection molding is possible, and the outlets 41 are normally operated by the explosion pressure, flame, and debris discharged by the vent hole 31 of the corresponding battery cell 30. Therefore, the entire area (A1-A2) of the outlet group 40 established by the outlets 41 is removed, and the outlet groups 40 are maintained to be in a normal state on the first plate 21 on which the normal battery cells 30 that are not exploded are disposed. By this, the outlets 41 are smoothly opened in in an emergency, and the chain explosion of the peripheral battery cells 30 may be prevented.

The area ratio ((A4*N)/(A1-A2)) of the closed area (A4*N) to the entire area (A1-A2) of the outlet group 40 may be established to be greater than 15.4% and less than 31.3%. When the area ratio ((A4*N)/(A1-A2)) is greater than 15.4% and less than 31.3%, the outlets 41 are normally operated by the explosion pressure, flame, and debris discharged from the vent hole 31 of the corresponding battery cell 30. The entire area (A1-A2) of the outlet group 40 established by the outlets 41 is removed, and the outlet groups 40 may be maintained to be in the normal state on the first plate 21 on which the normal battery cells 30 that are not exploded are disposed. Hence, the outlets 41 are smoothly opened in in an emergency, thereby preventing the chain explosion of the peripheral battery cells 30.

However, when the area ratio ((A4*N)/(A1-A2)) of the closed area (A4*N) to the entire area (A1-A2) of the outlet group 40 is equal to or greater than 31.3%, the entire area (A1-A2) of the outlet group 40 may not be normally operated and the first plate 21 may be removed by the discharged explosion pressure, flame, and debris.

A second embodiment of the present disclosure will now be described. The second embodiment will be compared with the first embodiment, same portions will not be described, and different portions will be described.

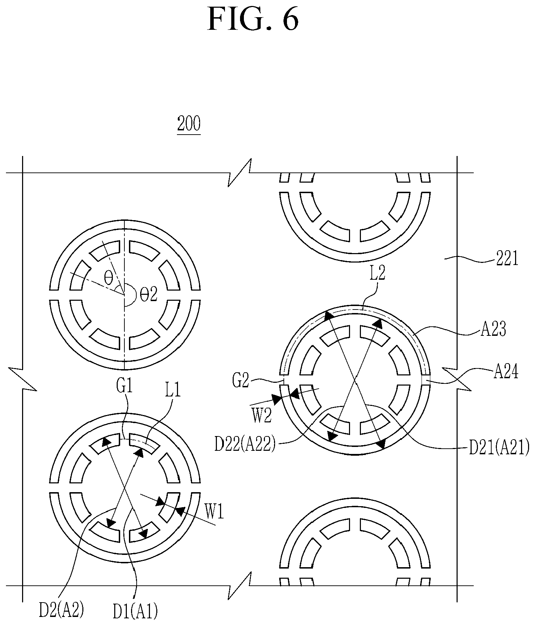

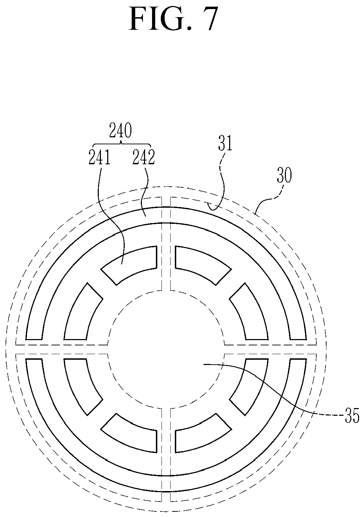

FIG. 6 shows a top plan view of a first plate applied to a rechargeable battery module according to a second embodiment of the present disclosure, and FIG. 7 shows a top plan view of an outlet relationship of a first plate on a vent hole of a battery cell in FIG. 6.

Referring to FIG. 6 and FIG. 7, regarding the rechargeable battery module 200 according to a second embodiment, the first plate 221 is installed on the first-side upper portion of the second holder 12 and includes an outlet group 240 including a plurality of first outlets 241 and second outlets 242 on the position that corresponds to the respective vent holes 31 of the battery cells 30.

That is, the outlet group 240 includes a plurality of first outlets 241 corresponding to the vent hole 31 and a plurality of second outlets 242 installed on the exterior circumference of the first outlets 241. For example, the first outlets 241 may be installed inside the diameter direction, and the second outlets 242 may be installed outside the diameter direction.

The first outlet 241 has the first width W1 in the diameter direction and has the first length L1 in the circumferential direction. The first length L1 represents the length of a curve established in the middle of the first width W1. The first outlets 241 have a first gap G1 in the circumferential direction. The first gap G1 represents the length of a curve established between the two neighboring first outlets 241 in the middle of the first width W1.

For example, eight first outlets 241 are formed, and the two adjacent first outlets 241 are established to have the angle of 45° (θ) with respect to the first length L1. They control performance for intercepting some of the explosion pressure, flame, and debris according to the number of the first outlets 241. When the number of the first outlets 241 is established, they control the performance for intercepting some of the explosion pressure, flame, and debris discharged according to the sizes of the first width W1, the first length L1, and the first gap G1 of the first outlet 241.

The second outlets 242 have a second width W2 in the diameter direction and have a second length L2 in the circumferential direction. The second length L2 represents the length of a curve established in the middle of the second width W2. The second outlets 242 have a second gap G2 in the circumferential direction. The second gap G2 represents the length of a curve established between the two neighboring second outlets 242 in the middle of the second width W2.

The multiple second outlets 242 are formed, and the adjacent second outlets 242 may be established to have the angle (θ2) of 90° to 180° with respect to the second length L2. For example, two second outlets 242 are formed, and the two adjacent second outlets 242 are established to have the angle (θ2) of 180° with respect to the second length L2. They control performance for intercepting the remaining portion of the explosion pressure, flame, and debris discharged according to the number of the second outlets 242. When the number of the second outlets 242 is established, they control the performance for intercepting the remaining portion of the explosion pressure, flame, and debris discharged according to the sizes of the second width W2, the second length L2, and the second gap G2.

In a like way of the outlet group 40 according to a first embodiment, the first outlets 241 form the first entire area (A1-A2) by the external first diameter D1 and the internal second diameter D2. That is, the first diameter D1 forms a first area A1, and the second diameter D2 forms a second area A2. Therefore, the entire area (A1-A2) in the area of the first outlets 241 of the outlet group 240 is calculated by subtracting the second area A2 from the first area A1.

The first entire area (A1-A2) includes an opened area (A3*N) caused by a plurality of first outlets 241 and a first closed area (A4*N) by a space among a plurality of first outlets 241 in the region of the first outlets 241 according to a second embodiment.

The second outlets 242 form the second entire area (A21-A22) by the external second 1-diameter D21 and the internal second 2-diameter D22. That is, the second 1-diameter D21 forms the first area A21, and the second 2-diameter D22 forms the second area A22. Hence, the entire area (A21-A22) is calculated by subtracting the second area A22 from the first area A21 in the region of the second outlets 242 of the outlet group 240.

In the region of the second outlets 242, the second entire area (A21-A22) includes an opened area (A23*N) by a plurality of second 1-outlets 241 and a second closed area (A24*N) by a space among a plurality of second outlets 242.

In the outlet group 240, an area ratio of the sum of the first closed area (A4*N) and the second closed area (A24*N) to the sum of the first entire area (A1-A2) and the second entire area (A21-A22), that is, the area ratio (((A4*N)+(A24*N))/((A1-A2)+(A21-A22))) of the closed area ((A4*N)+(A24*N)) to the entire area ((A1-A2)+(A21-A22)) may be established to be greater than about 10.78% and less than about 31.3%.

When the area ratio (((A4*N)+(A24*N))/((A1-A2)+(A21-A22))) is equal to or less than 10.78%, molding becomes difficult during injection. When the area ratio (((A4*N)+(A24*N))/((A1-A2)+(A21-A22))) is greater than 10.78% and equal to or less than 15.4%, the injection molding is possible, and the first outlets 241 and the second outlets 242 are normally operated by the explosion pressure, flame, and debris discharged by the vent hole 31 of the corresponding battery cell 30. Therefore, the first and second entire areas (A1-A2 and A21-A22) of the outlet group 240 established with the first outlets 241 and the second outlets 242 are removed, and the outlet groups 240 are maintained to be in the normal state on the first plate 21 on which the normal battery cells 30 that are not exploded are disposed. Hence, as the first outlets 241 and the second outlets 242 are smoothly opened in an emergency, the chain explosion of the peripheral battery cells 30 may be prevented.

The area ratio (((A4*N)+(A24*N))/((A1-A2)+(A21-A22))) of the outlet group 240 may be established to be greater than 15.4% and less than 31.3%. When the area ratio (((A4*N)+(A24*N))/((A1-A2)+(A21-A22))) is greater than 15.4% and less than 31.3%, the first outlets 241 and the second outlets 242 are normally operated by the explosion pressure, flame, and debris discharged by the vent hole 31 of the corresponding battery cell 30. Therefore, the first and second entire areas (A1-A2 and A21-A22) of the outlet group 240 established with the first outlets 241 and the second outlets 242 are removed, and the outlet groups 240 may be maintained at the normal state on the first plate 21 on which the normal battery cells 30 that are not exploded are disposed. Hence, the first outlets 241 and the second outlets 242 are smoothly opened in an emergency, thereby preventing the chain explosion of the peripheral battery cells 30.

However, when the area ratio (((A4*N)+(A24*N))/((A1-A2)+(A21-A22))) of the outlet group 240 is equal to or greater than 31.3%, the first and second entire areas (A1-A2 and A21-A22) of the first outlets 241 and the second outlets 242 may not be normally operated and the first plate 21 may be entirely removed by the discharged explosion pressure, flame, and debris.

While this disclosure has been described in connection with what is presently considered to be practical embodiments, it is to be understood that the disclosure is not limited to the disclosed embodiments, but, on the contrary, is intended to cover various modifications and equivalent arrangements included within the scope of the appended claims.

### <Description of symbols>

| | | | |
|---|---|---|---|
| 11: | first holder | 12: | second holder |
| 21, 221: | first plate | 22: | second plate |
| 30: | battery cell | 31: | vent hole |
| 32: | electrode assembly | 33: | case |
| 34: | cap assembly | 35: | cap plate |
| 36: | vent | 40, 240: | outlet group |
| 41: | outlet | 100, 200: | rechargeable battery module |
| 111: | first receiver | 113: | first protrusion |
| 121: | second receiver | 123: | second protrusion |
| 241: | first outlet | 242: | second outlet |
| A1: | first area | A2: | second area |
| A1-A2: | first entire area | A3: | opened area |
| A4: | closed area | A21: | first area |
| A22: | second area | A21-A22: | second entire area |
| A23: | second opened area | A24: | second closed area |
| D1: | first diameter | D2: | second diameter |
| D21: | second-1 diameter | D22: | second-2 diameter |
| G: | gap | G1: | first gap |
| G2: | second gap | L1: | first length |
| L2: | second length | W1: | first width |
| W2: | second width | θ, θ2: | angle |

## Claims

1. A rechargeable battery module comprising:
a plurality of battery cells including a vent hole;
a first holder for receiving one of sides of the battery cells and supporting the same;
a second holder receiving other sides of the battery cells and supporting the same and combined to the first holder;
a first plate installed on one side of the second holder and including an outlet group made of a plurality of outlets at positions corresponding to the respective vent holes of the battery cells; and
a second plate disposed on one side of the first plate, and configured to intercept an emission discharged through the vent hole and the outlet group.

2. The rechargeable battery module of claim 1, wherein
the battery cells are in the form of a cylindrical rechargeable battery.

3. The rechargeable battery module of claim 1 or claim 2, wherein
the outlet has a first width in a diameter direction and has a first length in a circumferential direction, and
the outlet group includes the outlets and has a first gap in the circumferential direction.

4. The rechargeable battery module of claim 3, wherein
the outlet group generates an entire area (A1-A2) by an external first diameter D1 and an internal second diameter D2,
the entire area (A1-A2) includes an opened area (A3*N) caused by a plurality of first outlets and a closed area (A4*N) caused by a space among a plurality of first outlets, and
a ratio of the closed area (A4*N) to the entire area (A1-A2) is established to be greater than 10.78% and less than 31.3%.

5. The rechargeable battery module of claim 4, wherein
the ratio (A4*N) of the closed area to the entire area (A1-A2) is established to be greater than 10.78% and equal to or less than 15.4%.

6. The rechargeable battery module of claim 4, wherein
the ratio (A4*N) of the closed area to the entire area (A1-A2) is established to be greater than 15.4% and less than 31.3%.

7. The rechargeable battery module of claim 1, wherein
the outlet group includes a plurality of first outlets corresponding to the vent hole and a plurality of second outlets installed on an exterior circumference of the first outlets.

8. The rechargeable battery module of claim 7, wherein
the first outlet has a first width in the diameter direction and has a first length in the circumferential direction,
the first outlets have a first gap in the circumferential direction,
the second outlets have a second width in the diameter direction and have a second length in the circumferential direction, and
the second outlets have a second gap in the circumferential direction.

9. The rechargeable battery module of claim 8, wherein
the first outlets generate a first entire area (A1-A2) by an external first diameter D1 and an internal second diameter D2,
the first entire area (A1-A2) includes an opened area (A3*N) caused by a plurality of first outlets and a first closed area (A4*N) caused by a space among a plurality of first outlets,
the second outlets generate a second entire area (A21-A22) by an external second 1-diameter D21 and an internal second 2-diameter D22,
the second entire area (A21-A22) includes an opened area (A23*N) caused by a plurality of second-1 outlets and a second closed area (A24*N) caused by a plurality of second outlets, and
a ratio of a sum of the first closed area (A4*N) and the second closed area (A24*N) to a sum of the first entire area (A1-A2) and second entire area (A21-A22) is established to be greater than 10.78% and less than 31.3%.

10. The rechargeable battery module of claim 9, wherein
the ratio of a sum of the first closed area (A4*N) and the second closed area (A24*N) to a sum of the first entire area (A1-A2) and the second entire area (A21-A22) is further established to be greater than 10.78% and equal to or less than 15.4%.

11. The rechargeable battery module of claim 9, wherein
the ratio of a sum of the first closed area (A4*N) and the second closed area (A24*N) to a sum of the first entire area (A1-A2) and the second entire area (A21-A22) is further established to be greater than 15.4% and less than 31.3%.
